Europäisches Patentamt

European Patent Office

Office européen des brevets

(11) Veröffentlichungsnummer : **0 068 112**
**B1**

(12) EUROPÄISCHE PATENTSCHRIFT

(45) Veröffentlichungstag der Patentschrift :
26.03.86

(21) Anmeldenummer : 82103915.3

(22) Anmeldetag : 06.05.82

(51) Int. Cl.⁴ : **A 61 C 5/08**, A 61 C 13/10,
A 61 C 13/30

(54) Extrakoronales Halteelement für Zahnprothesen.

(30) Priorität : 18.06.81 CH 4043/81

(43) Veröffentlichungstag der Anmeldung :
05.01.83 Patentblatt 83/01

(45) Bekanntmachung des Hinweises auf die Patenterteilung : 26.03.86 Patentblatt 86/13

(84) Benannte Vertragsstaaten :
DE FR IT

(56) Entgegenhaltungen :
CH-A-    359 834
DE-B- 1 079 277
DE-C-    671 579
FR-A- 1 356 367
US-A- 2 854 746

(73) Patentinhaber : Reinhard, Peter
Weingartenstrasse 8
CH-8957 Spreitenbach (CH)

(72) Erfinder : Hauri, Robert
Bahnhofstrasse 33
CH-5000 Aarau (CH)
Erfinder : Reinhard, Peter
Weingartenstrasse 8
CH-8957 Spreitenbach (CH)

(74) Vertreter : Meyer, Reinhard, Dipl.-Ing.
c/o Dr. A. R. Egli & Co. Patentanwälte Horneggstrasse
4
CH-8008 Zürich (CH)

**Beschreibung**

Die Erfindung betrifft ein extrakoronales Halteelement für Zahnprothesen, das aus einer Matrize und einer Patrize besteht, welche bei eingesetzter Zahnprothese durch eine Ringfeder zusammengehalten sind, wobei die Matrize mit einer ringförmigen Vertiefung ausgebildet und die Patrize als Ringkörper zum Einsetzen in die ringförmige Vertiefung geformt ist.

Im vermehrtem Masse wird von der Möglichkeit, dass Träger von Zahnprothesen ihre Zahnprothese selbst von der Verankerung lösen und, z. B. für Reinigungszwecke, herausnehmen können, Gebrauch gemacht. Es ist hierzu ein Halteelement bekannt (CH-A 343 061), das sich aus einem kappenförmigen, aus zwei Teilen zusammengeschraubten, als Matrize bezeichneten Glied und aus einem, aus ebenfalls zwei gleichen Teilen zusammengeschraubten, als Patrize bezeichneten Gegenglied zusammensetzt. Die Matrize und die Patrize sind durch eine Ringfeder bzw. einen Sprengring spielfrei zusammengehalten. Sowohl für das Lösen als auch für die Befestigung der Zahnprothese wird die Ringfeder bzw. der Sprengring an seiner, an der Patrize vorgesehen Haltefläche elastisch aufgeweitet, so dass ein gewisser Widerstand sowohl beim Lösen als auch beim Befestigen der Zahnprothese entsteht.

Weiterhin ist aus der CH-A 395 834 eine Zahnprothese mit einer Vorrichtung zur lösbaren Verbindung des Zahnprothesenkörpers mit einem zu einem Wurzelstift oder einer Wurzelkrone gehörenden bolzenförmigen Teil bekannt. Dieser bolzenförmige Teil weist eine Einschnürung auf, welche in Gebrauchslage von einem Federring eines Ringkäfigs in dem Zahnprothesenkörper belegt ist.

Bei diesen bekannten Halteelementen besteht der grosse Nachteil, dass sie für die Erreichung einer genügenden Stabilität eine vehältnismassig grosse Bauhöhe benötigen. Zudem ist das Halteelement nach der CH-A 343 061 wegen seiner verhältnismässig grossen Zahl von Einzelteilen in seinem Aufbau kompliziert und aufwendig. Die Herstellung der lösbaren Verbindung zwischen dem Zahnprothesenkörper und der Wurzelkrone nach der CH-A 359 834 kommt dagegen mit nur wenigen Einzelteilen aus, ihre Herstellung ist dafür umso komplizierter. Zum einen bedarf es einer guten Halterung des Wurzelstiftes in der Restwurzel und zum anderen muss die Innenoberfläche des Zahnprothesenkörpers genau dem bolzenförmigen Teil angepasst sein, um ein Wackeln des Zahns zu verhindern. Damit kann die Lösung der Verbindung aber wiederum nur durch ein Herausziehen des Zahnprothesenkörpers gerade nach oben erfolgen, wobei der Federring seine volle Sperrwirkung entfalten kann.

Die DE-C 671 579 befasst sich mit einem künstlichen Zahn, welcher innen eine Ausparrung aufweist, in die ein Haltestift aus dem Zahnkörper herausragt, dessen Kopf von einem Teil eines Führungstücks nachgiebig und auswechselbar umfasst wird. Damit hängt jedoch der feste Sitz des Zahns ausschliesslich von dem Haltestift und dessen Halterung im Zahn ab. Zudem können in die Aussparung Speisereste durch die ständige Bewegung des Zahns eindringen, da auch ein Hubraum vorgesehen ist, in welchem der Zahn bewegt werden kann.

Ähnliche Nachteile weist auch die Verbindung nach der US-A-2 854 746 zwischen einer Zahnprothese und einem künstlichem Zahn auf. Hier ist zwar der Haltestift nicht direkt in die Zahnkrone eingelassen, sondern über eine Patrize festgelegt. Auch hier geschieht die Halterung jedoch allein über den mittig angeordneten Haltestift, welcher mit einem Sprengring in eine Kaverne eingreift. Diese fast als punktförmig zu bezeichnende Halterung genügt nicht dem Anforderungen der Zahnprothese im täglichen Gebrauch, zumal der Zahn allseitig beweglich gelagert ist, so dass der Sprenging sehr leicht ausser Eingriff mit der ihn haltenden Schulter in der Kaverne gerät.

Der Erfindung liegt die Aufgabe zu Grunde, ein Halteelement der Eingangs beschriebenen Art so auszugestalten, dass es bei wesentlicher Vereinfachung seines Aufbaus zum einen mit einer erheblich kleineren Bauhöhe ausgeführt werden kann und dass zum anderen dabei auch seine Halterung selbst verbessert wird. Gleichzeitig soll es einfach zu lösen und für Reinigungsmittel bzw. -werkzeuge zugänglich sein.

Zur Lösung dieser Aufgabe führt, dass die Ringfeder in bzw. an dem Ringkörper der Patrize angeordnet und in zusammengebautem Zustand des Halteelements in einer in der Matrize eingearbeiteten Haltenut eingerastet ist.

Durch diese Ausgestaltung wird erreicht, dass sich Matrize und Patrize flächenweise gegeneinander abstützen, wobei diese Abstützung verhältnismässig weit von der Zentralachse des Halteelements entfernt ist, so dass eine grosse Stabilität des Halteelements auch bei wesentlich geringerer Bauhöhe erreicht wird.

Um das Zusammenfügen von Matrize und Patrize zu erleichtern und die flächenmässige Abstützung zu erhöhen, ist vorgesehen, dass die Vertiefung der Matrize und der Ringkörper der Patrize eine konische Querschnittsform aufweisen. Hierdurch lässt sich auch die Patrize leichter aus der Matrize lösen, da die Patrize gegen die Kraft der Ringfeder herausgekippt werden kann.

Zur Erleichterung der Reinigung soll ausserdem eine Spülöffnung vorgesehen sein.

Durch diese Ausgestaltung des Halteelements sind keine von aussen zugänglichen Oeffnungen oder Hohlräume in dem Halteelement vorgesehen, in welchen sich Speisereste od. dgl. festsetzen können. Damit wird auch die Fäulnisgefahr vermindert.

Die Erfindung ist in der Zeichnung in einem Ausführungsbeispiel dargestellt und nachfolgend beschrieben. Es zeigen :

Figur 1 eine schematisch dargestellte Ansicht, teilweise im Schnitt, der Matrize eines für Zahnprothesen vorgesehenen Halteelements,

Figur 2 eine schematisch dargestellte Ansicht, teilweise im Schnitt einer zur Matrize nach Fig. 1 passenden Patrize, auf der die Zahnprothese aufgebaut wird,

Figur 3 eine schematisch dargestellte Ringfeder zum Einbau in die Patrize nach Fig. 2,

Figur 4 eine Ansicht wie in Fig. 3, jedoch für eine andere Ausführungsform der Ringfeder und

Figur 5 eine Ansicht wie in Fig. 3 einer dritten Ausführungsform einer Ringfeder.

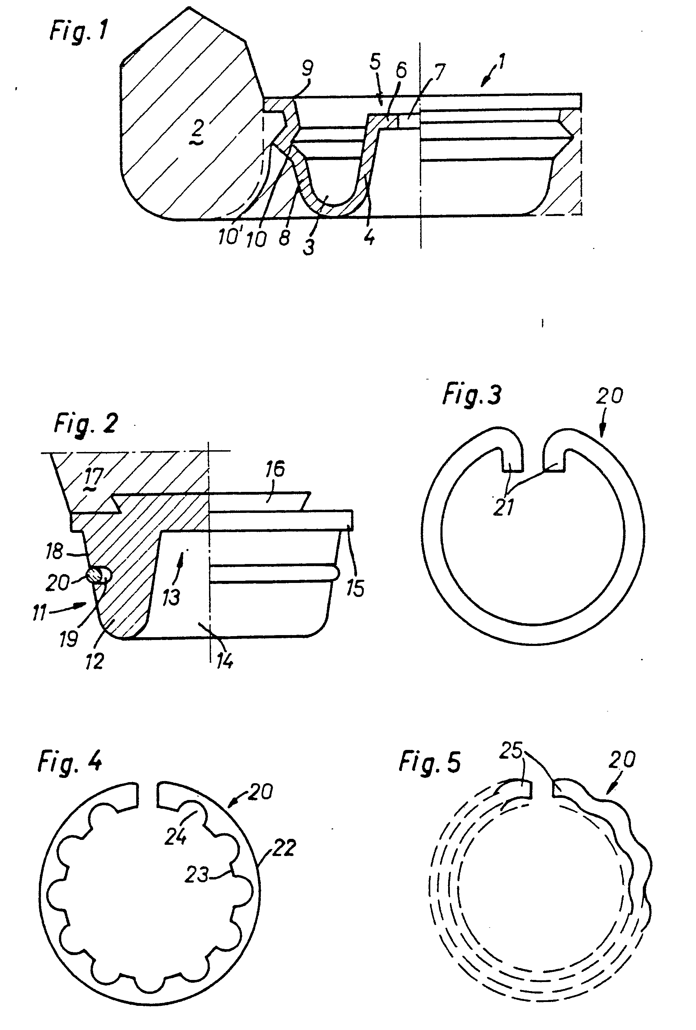

Die in Fig. 1 dargestellte Matrize 1 ist in nicht näher erläuterter Weise an eine schematisch angedeutete Zahnkrone 2 angegossen. Die Matrize 1 ist als Hochlschale ausgebildet und weist eine ringförmige Vertiefung 3 auf, die einen geschlossenen Kanal bildet. Die Innenwand 4 der Vertiefung 1 bildet eine zentrale Erhebung 5, die durch eine Abdeckung 6 begrenzt ist, in der eine zentrale Spülöffnung 7 angeordnet ist. Die Aussenwand 8 der Matrize erstreckt sich über die Abdeckung 6 der zentralen Erhebung 5 und weist an ihrem Ende einen Flansch 9 auf, der eine Versteifung für die Aussenwand 8 bildet. In der Aussenwand 8 ist auf der Seite der Vertiefung 3 eine Haltenut 10 eingearbeitet, der auf der Aussenseite der Aussenwand 8 eine Rippe 10' als Verankerung entspricht.

Die Patrize 11 nach Fig. 2 ist als Ringkörper 12 ausgebildet, bei dem auf der einen Seite ein Boden 13 einen Abschluss für eine zentrale Ausnehmung 14 bildet. Der Boden 13 weist einen über den Ringkörper 12 ragenden Flansch 15 auf und ist auf seiner Oberseite mit einer Verankerungsplatte 16 versehen, deren geneigte Seiten eine einwandfreie Verankerung mit einem, schematisch angedeuteten Zahnprothesenteil 17 ermöglichen.

Damit die Patrize 11 spielfrei in die Matrize 1 eingesetzt werden kann, weist der Ringkörper 12 dieselbe Querschnittform auf wie die Vertiefung 3 der Matrize 1. In der Aussenwand 18 des Ringkörpers 12 ist, etwa im Mittenbereich der Aussenwand 18, eine Umfangsnut 19 eingearbeitet, die eine Ringfeder 20 aufnimmt. Die Ringfeder 20 kann in verschiedener Weise ausgebildet sein, wie noch anhand von Fig. 3-5 dargelegt wird.

Beim Einsetzen der Patrize 11 in die Matrize 1 wird die Ringfeder 20 zunächst etwas zusammengedrückt und rastet dann in die Haltenut 10 ein. Durch entsprechende Ausbildung der schrägen Nutwände und Anordnung der Nut 10 kann erreicht werden, dass die Ringfeder 20 die Patrize spielfrei in der Vertiefung 3 der Matrize hält.

Dadurch, dass die Ringfeder 20 in der Patrize 11 angeordnet ist, wird sie auch beim Entfernen des Zahnprothesenteils 17 aus der Matrize 1 entfernt und ist damit zugänglich, z. B. für die Reinigung der Haltenut 10. Damit die Borsten der verwendeten Bürste nicht an den Ringfederenden hängenbleiben und die Ringfeder 20 aus der Nut 19 reissen, werden diese Enden nach Fig. 3-5 ausgebildet.

In Fig. 3 ist die Ringfeder 20 ein gebogener Runddraht, dessen Enden 21 einwärts gebogen sind. In der Haltenut 10 in der Matrize 1 sind entsprechende Vertiefungen vorzusehen, in die Engen 21 ragen. Die in Fig. 4 dargestellte Ringfeder 20 ist als Flachring mit glattem Aussenrand 22 ausgebildet. Der Innenrand 23 weist eine Anzahl Ausnehmungen 24 auf, die Stellen erhöhter Elastizität darstellen.

Die in Fig. 5 dargestellte Ringfeder 20 ist aus einem Runddraht hergestellt und ist wellenförmig geformt. Seine Enden 25 sind zweckmässig nach einwärts gebogen.

Wie aus Fig. 1 ersichtlich ist, laufen die Wände 4, 8 der Matrize 1 in Richtung des Grundes der Vertiefung 3 konisch zusammen. Dementsprechend weist auch der Ringkörper 12 der Patrize 11 eine konische Form auf. Die Form der Ausnehmung 3 bzw. des Ringkörpers 12 kann jedoch auch anders gewählt werden ; z. B. könnten die Wände annähernd parallel verlaufen. Wenn eine Neigung der Wände vorgesehen wird, ist diese zweckmässig nur so gross auszuführen, dass eine einwandfreie Halterung der Patrize 11 in der Matrize 1 durch die Ringfeder 20 möglich ist.

Das aus der Matrize 1 und der Patrize 11 gebildete Halteelement ist in seinem Aufbau sehr einfach. Wesentlich ist, dass keine zusammengeschraubten Teile verwendet werden müssen. Trotz der ausserordentlich geringen Bauhöhe wird eine sehr gute Stabilität des Halteelements erreicht.

In den Fig. 1 und 2 sind die beiden Teile stark vergrössert dargestellt. In Wirklichkeit beträgt der grösste Durchmesser der Matrize 1 etwa 5 mm, während die gesamte Bauhöhe der Matrize 1 und der Patrize 11 etwa 2,5 mm, d. h. nur etwa die Hälfte bekannter Halteelemente erreicht.

Das beschriebene extrakoronale Halteelement kann bei geringer Anpassung auch als intrakoronales Halteelement verwendet werden. Die bei bekannten Halteelementen möglichen Anwendungen sind auch beim beschriebenen Halteelement vorhanden. So kann das Halteelement für Giesszwecke in einem Kunststoffsteg angeordnet werden. Auch eine Ausführung in Gold zum Anlöten an eine Zahnwurzel ist ohne weiteres möglich. Die Verwendung als intrakoronales Geschiebe, d. h. der Einbau der Matrize und der Patrize im Zahn, ist ebenfalls möglich. Als Material für das Halteelement werden Gold, Platin und Legierungen davon verwendet.

**Patentansprüche**

1. Extrakoronales Halteelement für Zahnprothesen, das aus einer Matrize (1) und einer Patrize (11) besteht, welche bei eingesetzter Zahnprothese durch eine Ringfeder (20) zusammengehalten sind, wobei die Matrize (1) mit einer ringförmigen Vertiefung (3) ausgebildet und die Patrize (11) als Ringkörper (12) zum Einsetzen in die ringförmige Vertiefung (3) geformt ist, dadurch gekennzeichnet, dass die Ringfeder (20) in bzw. an dem Ringkörper (12) der Patrize (11) angeordnet und in zusammengebautem Zustand des Halteelements in einer in der Matrize (1) eingearbeiteten Haltenut (10) eingerastet ist.

2. Halteelement nach Anspruch 1, dadurch gekennzeichnet, dass die Vertiefung (3) der Matrize (1) und der Ringkörper (12) der Patrize (11) eine konische Querschnittform aufweisen.

3. Halteelement nach Anspruch 1, dadurch gekennzeichnet, dass die ringförmige Vertiefung (3) mit ihrer Innenwand (4) eine zentrale Spülöffnung (7) umschliesst.

4. Halteelement nach Anspruch 1, dadurch gekennzeichnet, dass die Ringfeder (20) an ihren Enden (21) einwärts gebogen ist.

5. Halteelement nach Anspruch 1, dadurch gekennzeichnet, dass die Ringfeder (20) am Innenrand Ausnehmungen (24) aufweist, die Stellen grösserer Elastizität bilden.

6. Halteelement nach Anspruch 1, dadurch gekennzeichnet, dass die Ringfeder (20) wellenlinienförmig ausgebildet ist und einwärts gebogene Enden (25) aufweist.

## Claims

1. Extracoronary assembly for attaching a dental prothesis, consisting of a female (1) and a male (11) portion, which are held together by means of an annular spring (20), when the dental prothesis is mounted, the female portion (1) being provided with an annular cavity (3) and the male portion (11) is shaped as an annular body (12) for insertion into the cavity (3), characterized in that the spring (20) is placed in or on the body (12) and is engaging a retaining groove (10) in the female portion (1), when the unit is assembled.

2. Assembly according to claim 1, characterized in that the cavity (3) of the female portion (1) and the annular body (12) of the male portion (11) have a conic sectional shape.

3. Assembly according to claim 1, characterized in that the inner wall (4) of the annular cavity (3) encloses a flushing opening (7).

4. Assembly according to claim 1, characterized in that the spring (20) is bent inwardly at its ends (21).

5. Assembly according to claim 1, characterized in that the spring (20) has recesses (24) with increased elasticity at its inner edge.

6. Assembly according to claim 1, characterized in that the spring (20) is undulatory and has inwardly bent ends (25).

## Revendications

1. Elément extra-coronaire de retenue de prothèses dentaires constitué par une matrice (1) et une patrice (11) qui, lorsque la prothèse dentaire est en place, sont maintenues assemblées par un ressort annulaire (20), la matrice (1) comportant une partie rentrante annulaire (3) et la patrice (11) ayant la forme d'un corps annulaire (12) pouvant s'engager dans la partie rentrante annulaire (3), caractérisé en ce que le ressort annulaire (20) est monté à l'intérieur ou au contact du corps annulaire (12) de la patrice (11) et qu'après le montage de l'élément de retenue il est engagé dans une rainure de maintien (10) ménagée dans la matrice (1).

2. Elément de retenue selon la revendication 1, caractérisé en ce que la partie rentrante (3) de la matrice (1) et le corps annulaire (12) de la partie (11) ont une section de forme conique.

3. Elément de retenue selon la revendication 1, caractérisé en ce que la partie rentrante annulaire (3) délimite, par sa paroi intérieure (4), un orifice de rinçage central (7).

4. Elément de retenue selon la revendication 1, caractérisé en ce que le ressort annulaire (20) est, à ses extrémités (21), incurvé vers l'intérieur.

5. Elément de retenue selon la revendication 1, caractérisé en ce que le ressort annulaire (20) comporte, dans sa paroi intérieure, des évidements (24) qui constituent des zones de plus grande élasticité.

6. Elément de retenue selon la revendication 1, caractérisé en ce que le ressort annulaire (20) a un contour ondulé et comporte des extrémités (25) incurvées vers l'intérieur.

# 0 068 112

Fig. 1

Fig. 2

Fig. 3

Fig. 4

Fig. 5

1